# EUROPEAN PATENT APPLICATION

(11) **EP 0 860 673 A2**
(43) Date of publication of application: **26.08.1998**
(21) Application number: 98102058.9
(22) Date of filing: 06.02.1998
(51) Int. Cl.: F28D 7/12

(54) **Synthesis gas waste heat boiler**

(30) Priority: 21.02.1997 US 37359 P
(71) Applicant: Haldor Topsoe A/S, DK-2800 Lyngby (DK)
(72) Inventor: Stahl, Henrik Otto, 2960 Rungsted Kyst (DK)

(57) **Abstract**

A fire tube heat exchanger with a plurality of heat exchanging tubes (3,4), wherein the heat exchanging tubes (3,4) are in form of a double tube with an outer tube (3) closed at outlet side and an open ended inner tube (4) spaced apart from the outer tube (3), adapted to exchange heat between a hot gas on tube side of the outer tube and a fluid on shell side of the tube.

## Description

### Field of the invention

Industrial production of ammonia is based on the ammonia synthesis process by which hydrogen and nitrogen are reacted to ammonia in an exothermic process. Ammonia synthesis is performed in a reactor at high pressure and elevated temperature, when nitrogen and hydrogen are flowing through a bed with an appropriate catalyst. Such reactor is called an ammonia converter. The heat produced by the exothermic process in the converter is often recovered by steam production in a synthesis gas waste heat boiler. The synthesis gas waste heat boiler is a heat exchanger in which the hot gas from the ammonia converter is cooled by indirect heat transfer to boiling water.

The synthesis gas waste heat boiler is operating at conditions which in many ways require design of the boiler. The most severe conditions are related to inlet gas tube to tube sheet joins.

In the waste heat boiler according to the invention no inlet gas tube to tube sheet joins. Therefore, most of the causes for boiler failure are avoided by that design.

### Background of the Invention

The synthesis gas waste heat boiler is subject to a number of special conditions, which are difficult to account for by combination in one design.

These conditions are related to the pressure, temperature, nitriding, hydrogen attack and stress corrosion.

The ammonia synthesis gas will typically be at a pressure of 120-220 bar. The boiling water will typically be at low (5-15 bar), medium (30-50 bar) or high pressure (90-130 bar). Separation walls between synthesis gas and boiling water must be designed for the highest pressure of the two fluids. In shell and tube heat exchanger this will normally result in a very thick tube sheet usually with a thickness of 300-450 mm.

Ammonia synthesis gas will be between 380°C and 500°C at the inlet to the boiler and between 200°C and 380°C at the outlet. The boiling water will be between 150°C and 330°C, depending on the steam pressure.

The synthesis gas waste heat boiler is often designed as a **U**-tube exchanger with a very thick tube sheet. The thick tube sheet will obtain a metal temperature which is close to the gas temperature of the sheet penetrating tubes. In case of **U**-tubes, this will imply that the inlet tube area will be hot whereas the outlet tube area will be cold. High thermal induced stresses is therefor a risk, if the temperature difference between inlet and outlet gas are too high. In case of low and medium pressure steam production is it desirable if a temperature difference of 200°C to 300°C could be acceptable. It is, however, difficult or impossible to design the U-tube waste heat boiler for such a big temperature difference.

Nitriding is a materials attack caused by the ammonia content of the synthesis gas. The severity of nitriding depends on the metal alloy and the metal temperature. Low alloy steels are attacked unacceptably at 380°C. Stainless steel can be used to 450°C or higher and Iconell will not be severely attacked even at 500°C. The inlet-tube area of a the tube sheet in a U-tube boiler will most often be hotter than 420°C. The materials, in contact with the synthesis gas, must therefore be high alloy. A surface protection by cladding or lining will be required on the gas side of the tube sheet and through the inlet hole surface.

Hydrogen attack will cause embrittlement in materials when exposed to hydrogen containing gasses. The important parameters are the hydrogen partial pressure, the temperature and the alloying elements of the steel. 2% Cr and 1% Mo steel alloy will typically be required by industrial synthesis gas composition, pressure and temperature.

Stress corrosion is a risk for the materials in connection with the water. This kind of corrosion is however not critical by ferritic materials, whereas austenitic materials are sensitive to this kind of attack.

The typical synthesis gas waste heat boiler is a **U**-tube heat exchanger with synthesis gas on the tube side and water/steam on the shell side. The tube sheet is very thick. The inlet side of the tube sheet is protected by Inconell cladding. If the tubes are welded to the gas side of the tube sheet, the tubes must be lines on the inner surface with Inconell all the way through the tube sheet. If the tubes are welded to the water side of the tube sheet, the inlet holes of the tube sheet must be protected by an Inconell lining.

Synthesis gas waste heat boilers often fails due to cracks caused by one or a combination of the described mechanical and/or corrosion phenomena. The most severe condition among these are concentrated around the inlet tube holes. That is due to the high temperature, the temperature difference between inlet and outlet tubes, stress corrosion, hydrogen build up between materials of different composition, nitriding and hydrogen attack.

### Description of the invention

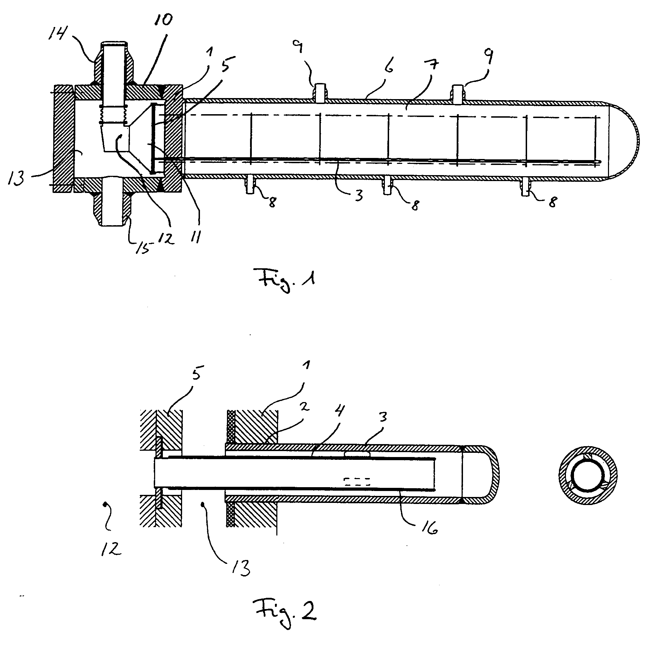

The waste heat boiler according to the invention consists of:
1) Tube sheet
2) Tube sheet holes
3) Heat exchange tubes
4) Inlet tubes
5) Inlet tube plate
6) Water/steam side pressure shell
7) Water/steam chamber
8) Water inlet nozzle
9) Water/steam outlet nozzle
10) Gas side pressure shell
11) Synthesis gas chamber
12) Inlet gas chamber
13) Outlet gas chamber
14) Inlet gas nozzle
15) Outlet gas nozzle
16) Inlet tube insulation
as shown in Fig. 1 and 2.

A tube sheet **1** is on one side connected to a water/steam side pressure shell **6** and on the other side connected to a gas side pressure shell **10** and forms the separation between water/steam chamber **7** and synthesis gas chamber **11**. The tube sheet is perforated with a number of holes **2**. Heat exchange tubes **3** are closed in one end, whereas the other end is welded to the tube sheet **1** in the tube sheet holes **2**. Heat exchange tubes **3** extends into the water/steam chamber **7**. An inlet tube plate **5** is placed inside the synthesis gas chamber **11**. The inlet tube plate **5** is perforated with holes corresponding to the holes in the tube sheet **1**. Inlet tubes **4** with an outer diameter that is smaller than the inner diameter of the heat exchange tubes **3** are fixed to the holes of the inlet tube plate **5** and extends into the inside of the heat exchange tubes **3**. The inlet tube plate **5** is connected to the inlet gas nozzle **14** by means of plates and shells forming a gas tight inlet gas chamber **12**. The inlet tubes **4** are covered with an insulation layer **15**.

Boiling feed water from a steam drum is flowing into the water/steam chamber **7** through the water inlet nozzle **8**. The heat exchange tubes **3** are supplying heat for boiling in the water/steam chamber **7**. A mixture of water and steam is leaving the water/steam chamber **7** through the water/steam outlet nozzles **9**. Hot synthesis gas from an ammonia converter enters into the gas inlet chamber **11** through the gas inlet nozzle **14**. The synthesis gas is now flowing through the holes of the inlet tube plate **5**, through the inlet tubes **4** to the closed end of the heat exchange tubes **3** from where it is returning in the annulus, outside the inlet tubes **4** and inside the heat exchange tubes **3**, back to the outlet gas chamber **13**. The synthesis gas is now leaving the boiler through the gas outlet nozzle **15**. When the synthesis gas is flowing in the annulus between the inlet tube **4** and the heat exchange tube **3**, it is cooled while it is transferring its heat by indirect heat transfer to the boiling water. Heat transfer between the inlet gas, flowing inside the inlet tubes **4** and the gas flowing in the annulus is avoided by means of insulating layer **16**.

The characteristic benefit of the waste heat boiler according to the invention is that the thick tube sheet **1** will only come in contact with the cooled outlet synthesis gas. All the problems experienced with synthesis gas waste heat boilers are as described above related to the hot inlet gas and the temperature difference between tubes in the thick tube sheet. The inlet tube plate **5** of the invention is thin, because it is a non pressure part and it can be made of austenitic high alloy steel because it is not in contact with the water.

### Example

A synthesis gas waste heat boiler has been designed for a 600 metric ton per day ammonia plant.

### Synthesis gas:

- Pressure (Bar):: 195
- Inlet temperature (°C):: 423
- Outlet temperature (°C):: 343
- Flow (kg/s):: 33.3
- Molecular weight (kg/kmole):: 11.35

### Water/steam:

- Pressure (Bar):: 119
- Inlet temperature (°C):: 324
- Outlet temperature (°C):: 324
- Steam produced (kg/s):: 7.0
- Molecular weight (kg/kmole):: 11.35

### Mechanical design:

- Number of tubes:: 200
- Heat exchange tube length (mm):: 6500
- Heat exchange tube OD (mm):: 45
- Heat exchange tube ID (mm):: 35
- Tube pitch, tri.rot. (mm):: 60
- Heat exchange tube materials:: 2¼Cr 1Mo
- Inlet tube length (m):: 6700
- Inlet tube OD (mm):: 26
- Inlet tube ID (mm):: 22
- Inlet tube materials:: SS/Cerafel
- Water/steam side pressure shell length (mm):: 7000
- Water/steam side pressure shell OD (mm):: 1230
- Water/steam side pressure shell ID (mm):: 1100
- Water/steam side pressure shell materials:: CS
- Gas side pressure shell length (mm):: 1100
- Gas side pressure shell OD (mm):: 1700
- Gas side pressure shell ID (mm):: 1250
- Gas side pressure shell materials:: 2¼Cr 1Mo
- Tube sheet thickness (mm):: 270
- Tube sheet materials:: 2¼Cr 1Mo

## Claims

1. A fire tube heat exchanger with a plurality of heat exchanging tubes, wherein the heat exchanging tubes are in form of a double tube with an outer tube closed at outlet side and an open ended inner tube spaced apart from the outer tube, adapted to exchange heat between a hot gas on tube side of the outer tube and a fluid on shell side of the tube.
